# FASCICULE DE BREVET EUROPEEN

(11) **EP 1 488 372 B1**
(45) Date de publication et mention de la délivrance du brevet: **01.04.2009**
(21) Numéro de dépôt: 02702456.1
(22) Date de dépôt: 05.02.2002
(51) Int. Cl.: G06F 3/041, G06F 3/044

(54) **DISPOSITIF D'AFFICHAGE MATRICIEL A DETECTION DE PROXIMITE**
MATRIXANZEIGEVORRICHTUNG ZUR NÄHERUNGSDETEKTION
PROXIMITY DETECTION MATRIX DISPLAY DEVICE

(30) Priorité: 13.02.2001 FR 0101941
(43) Date de publication de la demande: 22.12.2004
(73) Titulaire: Thales, 92200 Neuilly Sur Seine (FR)
(72) Inventeur: FAGARD, Pierre, Thales Intellectual Property, F-94117 Arcueil Cédex (FR)
(74) Mandataire: Collet, Alain
(86) Numéro de dépôt international: PCT/FR2002/000439
(87) Numéro de publication internationale: WO 2002/065389

(56) Documents cités:
- EP-A- 0 340 096
- EP-A- 0 742 531
- JP-A- 11 305 932
- US-B1- 6 239 788
- PATENT ABSTRACTS OF JAPAN vol. 008, no. 101 (P-273), 12 mai 1984 (1984-05-12) & JP 59 014040 A (CANON KK), 24 janvier 1984 (1984-01-24)

## Description

L'invention se rapporte à un dispositif d'affichage matriciel comportant des moyens de détection de proximité. On utilise de tels dispositifs notamment pour la réalisation de terminaux de communication du type permettant à un opérateur de transmettre et de recevoir des informations dans le cadre d'un échange convivial avec un processeur. L'invention trouve une application particulière pour les écrans des terminaux interactifs comportant des écrans à cristaux liquides, à plasma, à diodes électroluminescentes ou à émission par effet de champ.

Il est connu de réaliser de tels terminaux en disposant sur le dispositif une ou plusieurs plages tactiles transparentes à contact ou à effet capacitif, inductif ou équivalent. Le dispositif peut alors servir à délimiter des zones d'appuis de cette plage selon une composition désirée. L'appui sur la plage se fait habituellement par un doigt d'un opérateur. Les informations visuelles fournies par le dispositif sont inévitablement atténuées par les plages tactiles rapportées.

Pour remédier à ce problème le brevet européen EP 0 340 096 propose d'utiliser la surface de la contre-électrode d'un écran à cristaux liquides en remplacement de plages tactiles rapportées. Cette contre électrode a une surface importante en rapport avec la surface du doigt de l'opérateur, ce qui convient bien à la détection d'un doigt par effet capacitif. Une telle réalisation convient bien à un écran à cristaux liquides comportant des icônes ou des caractères prédéfinis lors de la construction de l'écran. A titre d'exemple, un tel écran permet l'affichage de caractères numériques composés chacun de sept segments qui peuvent être soit allumés ou éteints. Une contre électrode de ce type d'écran recouvre en général un ou plusieurs emplacements prédéfinis de caractères.

Une réalisation conforme au brevet EP 0 340 096 ne peut pas être utilisée pour réaliser une surface tactile à partir d'un écran matriciel comportant deux réseaux d'électrodes définissant les lignes pour l'un et les colonnes pour l'autre de la matrice de l'écran. En effet, un tel écran ne comporte aucune contre électrode de surface en rapport avec la surface d'un élément conducteur à détecter, comme par exemple le doigt d'un opérateur.

Le document JP 11-305932 A (représenté par le document US 6,239,788 B1) décrit un système d'affichage matriciel à cristaux liquides utilisant les électrodes d'affichage pour détecter la proximité d'un élément conducteur. Le dispositif décrit dans ce document met en oeuvre un jeu d'interrupteurs pour sélectionner les électrodes d'affichage et un autre jeu d'interrupteurs pour détecter la proximité d'un élément conducteur.

L'invention a pour but de réaliser de façon simple un dispositif d'affichage matriciel comportant des moyens de détection de proximité. A-cet effet, l'invention a pour objet un dispositif d'affichage électronique suivant la revendication 1.

Les dispositifs conformes à l'invention permettent de ne pas figer les zones d'appuis lors de la construction de l'écran matriciel. En effet, les moyens pour détecter la position de ladite région peuvent détecter la présence et la position d'un élément conducteur situé au voisinage immédiat de la zone d'affichage. Les zones d'appuis ne sont plus limitées en nombre, en dimension et en position et peuvent être positionnées et déplacées sur toute la zone d'affichage lors de son utilisation. Il est toujours bien entendu possible de délimiter les zones d'appuis par un affichage adéquat.

En outre, les dispositifs conformes à l'invention permettent d'éviter toute atténuation des informations visuelles affichées par le dispositif.

L'invention sera mieux comprise et d'autres avantages apparaîtront à la lecture de la description détaillée de plusieurs modes de réalisation donnés à titre d'exemple. La description est illustrée par le dessin joint dans lequel :
- la figure 1 a représente en vue de face la structure d'un dispositif d'affichage matriciel ;
- la figure 1b représente de profil ce même dispositif ;
- la figure 2 représente les moyens de l'invention associés à un des réseaux d'électrodes ;
- la figure 3 représente un mode de réalisation de l'invention utilisant à la fois les électrodes de lignes et les électrodes de colonnes ;
- la figure 4 représente un exemple de réalisation de moyens pour piloter l'affichage, réalisation adaptée à l'invention ;
- la figure 5 représente un autre exemple de réalisation de moyens pour piloter l'affichage, réalisation également adaptée à l'invention.

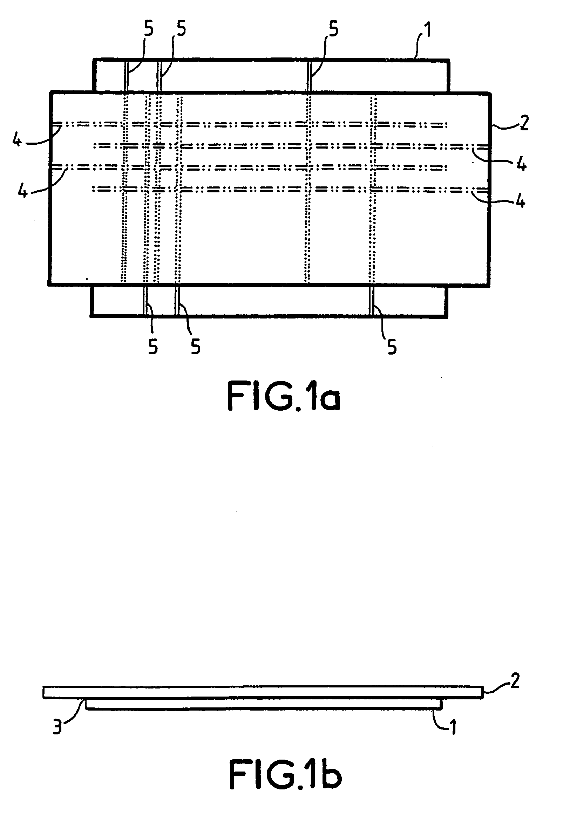

Le dispositif d'affichage matriciel représenté sur les figures 1a et 1b comporte deux plaques isolantes 1 et 2 disposées l'une au-dessus de l'autre. Au moins l'une des deux plaques 1 ou 2 est transparente. Le dispositif comporte également une couche 3 réalisée dans un matériau présentant des propriétés électro-optiques aptes à transmettre ou non un rayonnement lumineux sous l'effet d'une excitation électrique. Ce matériau comporte par exemple du cristal liquide. Le dispositif comporte en outre deux réseaux 4 et 5 d'électrodes. Le premier réseau 4 définit les lignes de la matrice du dispositif et le second réseau 5 définit les colonnes de la matrice du dispositif. Sur la figure 1a, seules quelques électrodes de chaque réseau 4 et 5 ont été représentées à titre d'exemple. Il est bien entendu que l'invention peut être mise en oeuvre quel que soit le nombre d'électrodes de chaque réseau. A titre d'information, les afficheurs couramment employés dans les écrans portables comportent généralement plus de 100 électrodes par réseau. Avantageusement, les électrodes 4 et 5 sont réalisées dans un matériau comportant de l'oxyde d'étain et d'indium. Ce matériau a l'avantage d'être transparent au rayonnement lumineux.

Le premier réseau d'électrodes 4 est situé entre la plaque 2 et la couche 3. Le second réseau d'électrodes 5 est situé entre la plaque 1 et la couche 3. L'excitation électrique de la couche 3 est réalisée en appliquant une différence de potentiel entre une électrode de chaque réseau. La différence de potentiel est par exemple due à une tension alternative basse fréquence de l'ordre de 50 à 1000 Hertz.

Avantageusement, les électrodes 4 et 5 des deux réseaux sont interdigitées. Plus précisément, pour chaque réseau, une électrode sur deux dispose d'un point de raccordement électrique situé au voisinage d'un bord de la plaque correspondante. Les points de raccordement des autres électrodes du même réseau sont situés sur le bord opposé de la même plaque. Cela permet pour le dispositif d'espacer les points de raccordements et, par conséquent, d'augmenter l'isolement entre deux connexions voisines. On verra plus loin dans la description l'avantage que procure la structure interdigitée pour améliorer la détection de la position d'un élément conducteur.

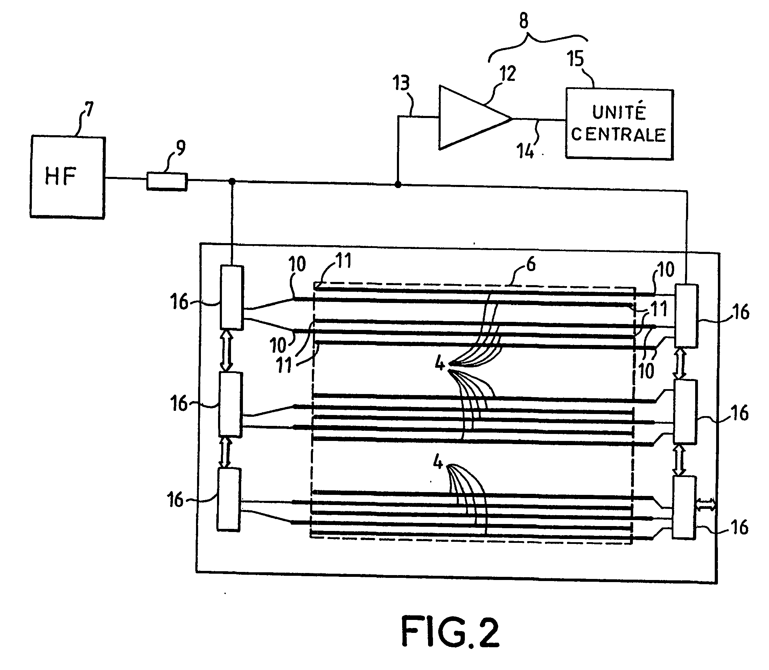

Dans une première variante, décrite à l'aide de la figure 2, les électrodes de lignes et les électrodes de colonnes forment respectivement deux réseaux distincts. Au moins un réseau est choisi pour la détection de proximité. Les moyens pour déterminer la position de ladite région définissent cette position en fonction du niveau desdites modifications intervenant sur le réseau choisi.

Plus précisément, le réseau d'électrodes 4 est par exemple utilisé comme élément sensible. La zone d'affichage forme la surface tactile 6. Le dispositif comporte des moyens électroniques 7 pour générer un signal électrique spécifique appliqué au réseau d'électrodes 4. Le signal électrique spécifique est distinct de l'excitation électrique appliquée entre les électrodes 4 et 5 des deux réseaux pour modifier l'état du cristal liquide. Avantageusement, le signal électrique spécifique est un signal haute fréquence de fréquence supérieure à 100 kilohertz. Le dispositif comporte en outre des moyens électroniques 8 aptes à détecter des modifications du signal électrique dues à la présence d'un élément conducteur de l'électricité, comme par exemple le doigt d'un opérateur, à proximité du réseau d'électrodes 4.

Les moyens électroniques 7 sont par exemple reliés à une électrode 4 par l'intermédiaire d'une impédance 9 qui peut avoir une valeur de l'ordre de 500 ohms à quelques kilo-ohms. Lorsqu'on applique à une électrode 4 le signal électrique, on peut comparer son comportement à celui d'une impédance dont la valeur est de l'ordre de plusieurs centaines de kilo-ohms à la fréquence du signal électrique spécifique. Par contre, lorsqu'un élément conducteur est disposé au voisinage de l'électrode 4, celle-ci se comporte alors comme une impédance dont la valeur diminue. Cette valeur peut descendre par exemple jusqu'à 10 kilo-ohms, voire moins. Cette valeur est fonction de la position de l'élément conducteur le long de l'électrode 4. On met ici à profit le fait que les électrodes 4 ont une impédance de ligne non nulle lorsqu'un signal électrique haute fréquence leur est appliqué. Plus l'élément conducteur est proche d'une extrémité 10 de l'électrode 4, extrémité la plus proche de l'impédance 9, plus la valeur de son impédance baisse. Au contraire, plus l'élément conducteur est proche de l'autre extrémité 11, dite « extrémité en l'air », plus l'impédance de l'électrode croît. En effet, l'électrode 4 forme une ligne résistive dont la résistance augmente avec la distance séparant l'extrémité 10 du point de détection de l'élément conducteur.

La mesure de variation de l'impédance de l'électrode 4 permet donc de déterminer la position de l'élément conducteur le long de l'électrode 4. Cette mesure peut être réalisée indirectement en détectant entre l'impédance 9 et l'électrode 4, la modification du signal électrique spécifique à l'aide de moyens électroniques 8. Ces moyens comportent par exemple un démodulateur d'amplitude 12 dont l'entrée 13 est raccordée entre l'impédance 9 et l'électrode 4. La sortie 14 du démodulateur d'amplitude 12 fournit à une unité centrale 15 un signal représentatif d'une éventuelle modification du signal électrique spécifique. L'unité centrale 15 peut comparer le signal issu du démodulateur d'amplitude 12 à une table de valeur mémorisée, table donnant la correspondance entre la modification du signal électrique et la position de l'élément conducteur le long de l'électrode 4.

La modification du signal électrique ainsi que sa détection ont été décrits en rapport à une seule électrode 4, ce qui permet de déterminer la position d'un élément conducteur le long de cette électrode 4. De plus, pour déterminer complètement la position de l'élément sensible par rapport à la surface tactile 6, il est nécessaire de connaître à côté de quelle électrode 4 du réseau se trouve l'élément conducteur.

La détermination de l'électrode 4 concernée peut se faire en utilisant, pour chaque électrode 4, une impédance 9 et des moyens électroniques 8 particuliers. Cette solution est lourde et avantageusement, le signal électrique n'est pas appliqué simultanément mais successivement aux différentes électrodes du réseau. Ceci permet d'utiliser une impédance 9 et des moyens 8 communs à plusieurs électrodes 4 regroupées dans un ensemble d'électrodes 4 dans lequel le signal est appliqué successivement. Il peut y avoir un ou plusieurs ensembles d'électrodes 4 dans un même réseau.

La redondance de la détection peut être améliorée. En effet, les afficheurs matriciels comportent au moins deux réseaux d'électrodes 4 et 5 comme décrit à l'aide de la figure 1a. Il est avantageux d'utiliser ces deux réseaux comme élément sensible de la surface tactile. Le fait d'utiliser deux réseaux d'électrodes 4 et 5 par exemple orthogonaux permet, en outre, de déterminer les dimensions d'un élément conducteur placé à proximité de la surface tactile 6. En effet, chaque électrode 4 ou 5 influencée par l'élément conducteur permet de définir la distance entre son extrémité 10 et une limite de l'élément conducteur.

Dans une seconde variante, il est également possible d'utiliser les deux réseaux d'électrodes 4 et 5 de façon plus simple sans chercher à déterminer la distance séparant un élément conducteur de l'extrémité 10 d'une électrode 4 ou 5. Le signal électrique spécifique est appliqué à la fois aux électrodes 4 et aux électrodes 5. L'unité centrale 15, afin de déterminer la position de ladite région, définit cette position en fonction d'au moins une électrode 4 et d'au moins une électrode 5 pour lesquelles lesdites modifications franchissent un seuil.

On se contente dans ce cas de déterminer s'il y a ou non présence d'un élément conducteur au voisinage d'une électrode 4 ou 5. En connaissant au moins une électrode 4 et au moins une électrode 5, où l'on détecte l'élément conducteur, on détermine sa position dans un repère cartésien dont les unités de mesure sont les électrodes 4 pour une direction et les électrodes 5 pour l'autre direction. Les signaux électriques spécifiques sont alors appliqués à la fois aux lignes et aux colonnes d'électrodes 4 et 5, et l'unité centrale 15 détermine la position de l'élément conducteur en fonction d'au moins une électrode 4 et une électrode 5 pour lesquelles les modifications de signaux électriques spécifiques franchissent un seuil. La réalisation du démodulateur d'amplitude est alors simplifiée. Il devra simplement délivrer à l'unité centrale 15 une information concernant le franchissement ou non d'un seuil par le signal électrique spécifique modifié.

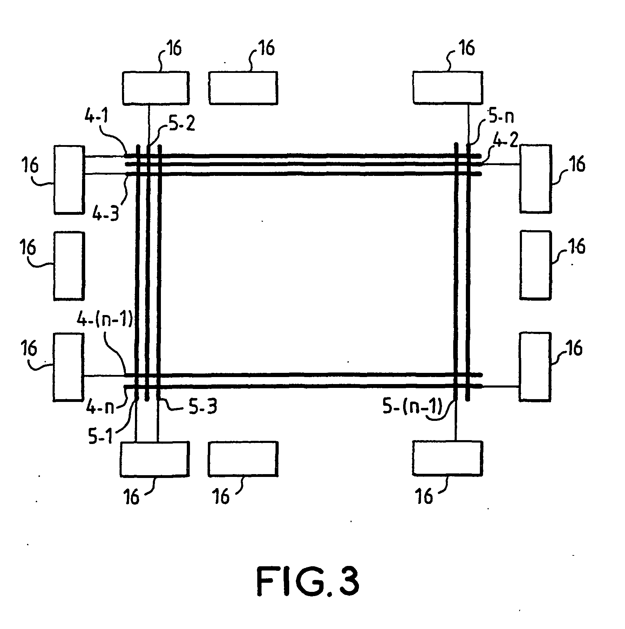

Dans une troisième variante, décrite à l'aide de la figure 3, le dispositif d'affichage comporte le réseau d'électrodes 4, le réseau d'électrodes 5 ainsi que des moyens 16 pour piloter l'affichage. Dans cette variante, le signal électrique spécifique, généré par les moyens 7 non représentés sur la figure 3, est appliqué simultanément à au moins une électrode de ligne 4 et à au moins une électrode de colonne 5. Des couplages entre l'électrode de ligne 4 et l'électrode de colonne 5 sont modifiés lorsque l'élément conducteur est à proximité du croisement entre l'électrode de ligne 4 et l'électrode de colonne 5. Le signal électrique spécifique est avantageusement appliqué à un ensemble formé par les deux réseaux d'électrodes 4 et 5 de façon diagonale.

Plus précisément, les électrodes 4 portent un numéro d'ordre de 4-1 à 4-n. Il en est de même pour les électrodes 5 qui portent un numéro de 5-1 à 5-p. p et n représentent des nombres entiers. Le signal électrique est appliqué successivement aux électrodes 4 dans l'ordre de 4-1 à 4-n. Dans le même temps, le signal électrique est appliqué successivement aux électrodes 5 dans l'ordre de 5-1 à 5-p. Le signal électrique est appliqué simultanément à au moins une électrode 4 et à au moins une électrode 5. Des couplages entre l'électrode 4 et l'électrode 5 sont modifiés lorsque l'élément conducteur est à proximité du croisement entre l'électrode 4 et l'électrode 5. Ces couplages représentent une impédance formée entre ces deux électrodes. Au début d'une séquence, on applique le signal électrique à l'électrode 4-1 et à l'électrode 5-1. Ensuite, on applique le signal électrique aux électrodes 4-2 et 5-2 et ainsi de suite. Lorsque les nombres n et p sont égaux, cette séquence se déroule jusqu'à les atteindre. Lorsque ces nombres sont différents, par exemple lorsque p est supérieur à n, on peut appliquer le signal électrique à une électrode 4-i et une électrode 5-j puis à l'instant suivant à l'électrode 4-i de nouveau et à l'électrode 5-(j+1). i représente un nombre entier compris entre 1 et n et j un autre nombre entier compris entre 1 et p. On renouvelle cette double application du signal électrique à l'une des électrodes 4 autant de fois que nécessaire pour qu'au dernier instant de la séquence, on applique le signal électrique aux électrodes 4-n et 4-p. Si plusieurs doubles applications sont nécessaires, on choisit des électrodes 4-i sensiblement réparties entre 1 et n. On peut parcourir ainsi une diagonale ou éventuellement aux deux diagonales de la zone d'affichage.

On obtient ainsi un relevé de mesure permettant une localisation cartographique, ceci grâce aux couplages existant entre les électrodes 4 et les électrodes 5. Plus précisément, la cartographie consiste à mémoriser le niveau du signal électrique, éventuellement modifié par la présence d'un élément conducteur, pour chaque couple d'électrodes 4 et 5 pour lesquelles le signal électrique est appliqué simultanément. L'ensemble de ces niveaux forme une table dite courante. La table courante est ensuite comparée à plusieurs tables préenregistrées, représentant chacune une position détectable de l'élément conducteur à proximité de la zone d'affichage. Lorsque la table courante comporte des valeurs sensiblement égales à celles d'une table préenregistrée, on en déduit la position de l'élément conducteur. On peut également exploiter cette cartographie, en s'inspirant du procédé décrit dans la demande de brevet FR 2 757 659 déposée au nom de SEXTANT AVIONIQUE comme si la surface de détection de proximité était continue.

La modification du signal électrique détectée par les moyens électroniques 8 est de faible niveau et peut être perturbée par de nombreux phénomènes tel que par exemple des parasites électriques. Pour pallier ce problème, le dispositif d'affichage comporte avantageusement des moyens électroniques aptes à cumuler les modifications du signal électrique détecté par les moyens 8. Ces moyens électroniques peuvent être formés par l'unité centrale 15. Le cumul se fait sur plusieurs électrodes voisines. En pratique, lorsque le doigt de l'utilisateur est posé sur l'afficheur, en vue d'une action au moyen de la surface tactile, il recouvre systématiquement plusieurs électrodes 4, par exemple de 10 à 30 électrodes 4. Il n'y a donc aucune incidence à ne pas prendre en compte une modification du signal électrique n'intervenant que sur une électrode 4, voire sur un nombre très réduit d'électrodes 4 voisines, par exemple 5 électrodes 4. L'unité centrale 15 peut donc interpréter des modifications du signal électrique, modifications intervenues sur des électrodes 4 voisines, comme une présence d'un élément conducteur, que lorsqu'au moins un certain nombre d'électrodes 4 voisines sont concernées par la modification. Le nombre d'électrodes 4 est alors déterminé par l'espacement de celles-ci. De la même façon, on ne prendra pas non plus en compte des modifications du signal électrique intervenues sur un nombre plus important d'électrodes 4 non voisines.

On a vu précédemment, dans la première variante, que le niveau de la modification due à la présence d'un élément conducteur était fonction de la position de l'élément conducteur le long d'une électrode 4. Il est en conséquence possible d'ajouter une condition supplémentaire lors de l'interprétation des modifications du signal électrique intervenues sur plusieurs électrodes 4 voisines. L'unité centrale 15 peut donc interpréter des modifications intervenues sur des électrodes 4 voisines comme une présence d'un élément conducteur que lorsque ces modifications sont de niveau sensiblement égal.

Avantageusement, le signal électrique spécifique est appliqué successivement à différentes électrodes 4 ou 5. Cela permet d'éviter d'éventuels couplages entre des électrodes voisines, plus particulièrement entre des électrodes du même réseau. En effet, la proximité d'un élément conducteur modifie l'impédance d'une électrode au voisinage de laquelle il se trouve. Cette modification est en général très faible et un couplage entre deux électrodes est susceptible de masquer cette modification, d'où l'intérêt d'éviter les couplages entre électrodes voisines.

Par ailleurs, on a constaté, dans l'utilisation de la première variante, que le niveau de modification, en l'occurrence d'atténuation, n'est pas une fonction linéaire de la position de l'élément conducteur le long d'une électrode 4. Plus précisément, pour un même déplacement de l'élément conducteur le long de l'électrode 4, la variation de niveau du signal électrique est plus importante au voisinage de l'extrémité 10 de l'électrode 4, extrémité la plus proche de l'impédance 9 qu'au voisinage de l'extrémité 11 dite extrémité libre de l'électrode 4. En conséquence, la sensibilité de la mesure de position de l'élément conducteur le long de l'électrode 4 est bien meilleure au voisinage de l'extrémité 10.

Pour pallier ce défaut, on peut mettre à profit une structure inter digitée du ou des réseaux d'électrodes 4 utilisés comme élément sensible. Avec une telle structure, la précision de la position de l'élément conducteur le long de plusieurs électrodes 4 voisines sera obtenue avec l'électrode 4 pour laquelle l'élément conducteur est plus proche de son extrémité 10.

Dans la première variante, l'utilisation de la structure inter digitée permet aussi d'augmenter la redondance des mesures de position de l'élément sensible le long de plusieurs électrodes 4 voisines. La structure inter digitée permet en outre de discriminer deux éléments conducteurs posés simultanément sur la surface tactile 6 à proximité de plusieurs électrodes 4 voisines. En effet, les électrodes 4 raccordées à leur extrémité 10 au voisinage d'un bord de la surface tactile 6 permettent de déterminer la position de l'élément conducteur le plus proche de cette extrémité 10. En revanche, les électrodes 4 raccordées à leur extrémité 10 au voisinage du bord opposé de la surface tactile permettront de déterminer la position de l'autre élément conducteur.

De plus, l'ensemble des électrodes influencées, lorsque ces réseaux ont une structure inter digitée, permet de définir le contour de l'élément conducteur. Lorsqu'un opérateur pose à la fois la main et un doigt sur la surface tactile 6, l'unité centrale 15 peut utiliser les informations définissant les contours de la main et du doigt pour, par exemple, ne prendre en compte que le doigt et pas la main.

On a vu précédemment que l'élément conducteur peut être le doigt d'un opérateur. A titre de variante, l'élément conducteur peut comporter un stylet conducteur tenu par l'opérateur. Ce stylet comporte une extrémité que l'opérateur peut poser sur l'afficheur. Avantageusement, cette extrémité a une surface suffisante pour recouvrir plusieurs électrodes 4 ou 5 voisines. Le stylet assure une conduction électrique entre l'extrémité destinée à être posée sur le dispositif et son corps que tient l'opérateur. Cela permet de modifier le signal électrique appliqué à la ou les électrodes considérées par effet capacitif. A titre d'alternative, le stylet peut être relié par une connexion filaire à la masse des moyens 7 générant le signal électrique.

Avantageusement, le signal électrique spécifique a une fréquence supérieure à 100 kilohertz. Cela permet d'utiliser un effet capacitif pour détecter la présence de l'élément conducteur à proximité de la zone d'affichage.

Avantageusement, le dispositif comporte des moyens 16 pour piloter l'affichage. Ces moyens sont connus dans la littérature anglo-saxonne sous le nom de « driver ». Les moyens 16 comprennent un multiplexeur 17 destiné à appliquer à une électrode 4 sélectionnée pour l'affichage une tension 22 d'excitation et le signal électrique spécifique. Cela permet d'appliquer le signal électrique spécifique aux électrodes choisies pour la détection de proximité de façon cyclique. Plus précisément, on applique successivement à l'ensemble des électrodes choisies dans un ordre prédéterminé le signal électrique spécifique, puis on renouvelle cette application dans le même ordre, tant que l'on cherche à détecter la proximité d'un élément conducteur.

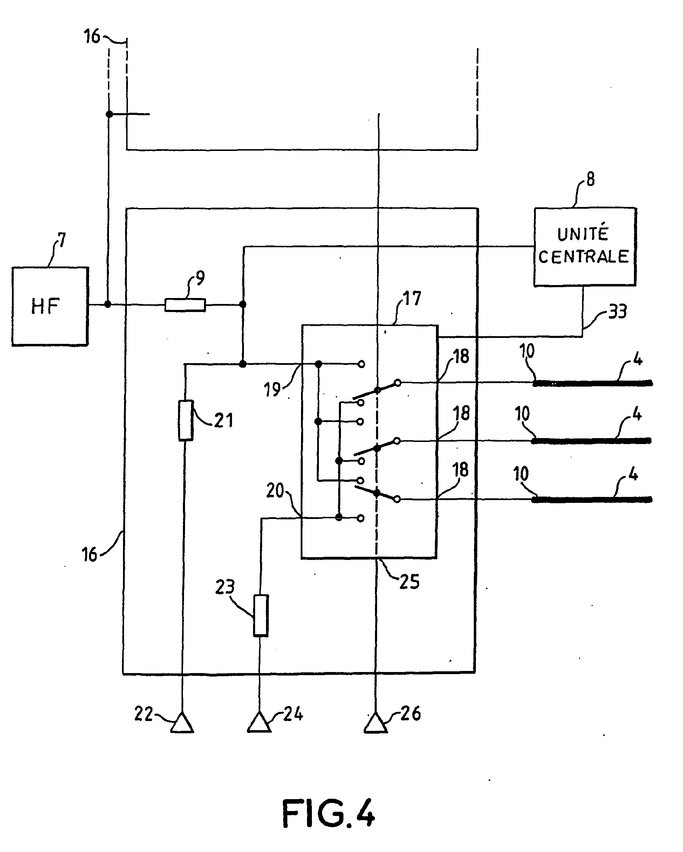

Un exemple de réalisation des moyens 16 pour piloter l'affichage est représenté figure 4. Les moyens 16 comportent un multiplexeur 17 dont des sorties 18 sont raccordées aux extrémités 10 des électrodes 4. Il est bien entendu que les moyens 16 peuvent être utilisés avec les électrodes 5. Le multiplexeur comporte deux entrées 19 et 20 auxquelles sont raccordées des sources de tension. Sur l'entrée 19 on dispose, par l'intermédiaire d'une impédance 21, d'une tension 22 que le multiplexeur 17 émet vers une électrode 4 sélectionnée pour réaliser un affichage. Sur l'entrée 20, on dispose, par l'intermédiaire d'une impédance 23, d'une tension 24 que le multiplexeur 17 émet vers une électrode 4 non sélectionnée pour réaliser un affichage. Les tensions 22 et 24 forment l'excitation électrique de la couche 3. L'entrée 19 est également raccordée à l'impédance 9 qui appartient aux moyens 16. Cette entrée 19 est également raccordée aux moyens 8 qui sont communs à plusieurs moyens 16. Les moyens 8 sont, par conséquent, extérieurs aux moyens 16. Les impédances 9 et 21 permettent la superposition du signal électrique émis par les moyens 7 et de l'excitation électrique formée par la tension émise vers l'électrode 4 sélectionnée. Le multiplexeur 17 comporte en outre une entrée 25 commandant le multiplexeur. Sur cette entrée 25, est raccordée une liaison 26 sur laquelle circule un signal permettant de sélectionner l'électrode 4 qui reçoit la tension 22 et le signal électrique issu des moyens 7 par l'intermédiaire des impédances 9 et 21.

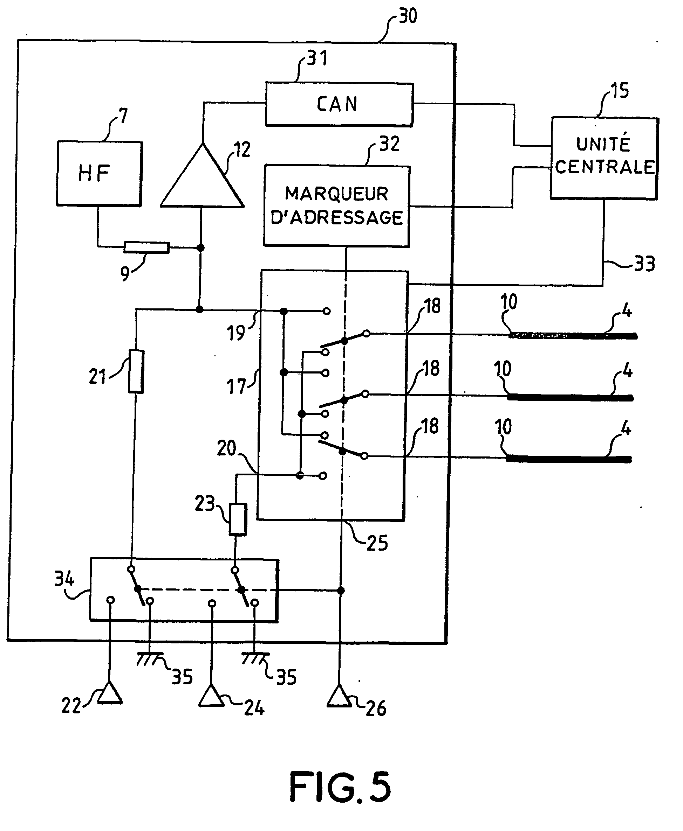

Une variante de réalisation des moyens pour piloter l'affichage est représentée figure 5. Cette variante porte ici le repère 30. Comme précédemment, les moyens 30 comportent le multiplexeur 17 et les impédances 9, 21 et 23. Le multiplexeur 17 reçoit sur son entrée 19 la tension 22 par l'intermédiaire de l'impédance 21 et sur son entrée 20 la tension 24 par l'intermédiaire de l'impédance 23. Il reçoit également sur son entrée 25 la liaison 26. De plus, les moyens 30 comportent les moyens électroniques 7 générant le signal électrique spécifique, le démodulateur d'amplitude 12, avantageusement synchronisé sur les moyens électroniques 7, un convertisseur analogique-numérique 31 et un marqueur d'adressage 32. Le convertisseur analogique-numérique 31 reçoit une information représentative des modifications, information issue du démodulateur d'amplitude 12 et fournit une information numérique vers l'unité centrale 15 qui est extérieure aux moyens 30. Le marqueur d'adressage 32 reçoit une information du multiplexeur 17 permettant d'identifier l'électrode 4 recevant le signal électrique. Le marqueur d'adressage adapte cette information pour la transmettre à l'unité centrale 15. L'unité centrale 15 peut alors associer le signal électrique modifié issu du convertisseur analogique-numérique 31 et l'électrode 4 considérée.

Dans les figures 4 et 5 précédemment décrites l'unité centrale 15 peut être reliée au multiplexeur 17 par une liaison 33 permettant à l'unité centrale 15 de commander le multiplexeur 17. La liaison 33 relie chaque multiplexeur 17 à l'unité centrale 15. La liaison 33 vient en complément de la liaison 26 qui relie l'ensemble des multiplexeurs 17 également à l'unité centrale 15. Avantageusement, les multiplexeurs 17 sont reliés en chaîne au moyen de la liaison 26.

Avantageusement, le signal électrique spécifique est superposé à l'excitation. Cela permet de ne pas interrompre l'excitation nécessaire à l'affichage pour appliquer le signal électrique spécifique à l'électrode considérée.

Dans certains dispositifs d'affichage, par exemple bistable, l'excitation nécessaire à l'affichage n'est pas appliquée régulièrement aux électrodes, mais seulement lorsque l'affichage est modifié. On peut alors appliquer le signal électrique spécifique à une électrode 4 ou 5 lorsque l'excitation n'est pas appliquée à cette électrode. A cet effet, on peut prévoir que les moyens 16 ou 30 pour piloter l'affichage comportent un interrupteur d'inhibition 34 permettant soit d'appliquer aux entrées 19 et 20 les tensions 22 et 24, soit de relier ces entrées 19 et 20 à une masse 35. L'interrupteur d'inhibition 34 est représenté sur la figure 5. L'entrée 19 reste néanmoins reliée aux moyens 7. L'interrupteur d'inhibition 34 est commandé par le signal circulant sur la liaison 26. Lorsque les entrées sont reliées à la masse, la liaison 33 peut toujours commander le multiplexeur 17 afin d'appliquer le signal électrique spécifique aux électrodes 4.

## Revendications

1. Dispositif d'affichage électronique comprenant des moyens de détection de proximité d'un élément conducteur situé à proximité d'une zone d'affichage du dispositif, un ensemble d'électrodes de lignes (4) et d'électrodes de colonnes (5) balayant la zone d'affichage, des moyens pour générer une excitation des électrodes de lignes et des électrodes de colonnes en fonction d'une image à afficher sur la zone d'affichage, des moyens (16, 30) pour piloter l'affichage comportant un multiplexeur (17) destiné à appliquer à une électrode (4, 5) sélectionnée pour l'affichage une tension (22) d'excitation, les moyens de détection de proximité comportant :
- des moyens (7) pour appliquer audit ensemble un signal électrique spécifique distinct de la tension d'excitation,
- des moyens (8) pour détecter des modifications du signal électrique spécifique induites par la présence d'un élément conducteur à proximité d'une région de la zone d'affichage,
- et des moyens (15) pour déterminer la position de ladite région en fonction desdites modifications détectées,
**caractérisé en ce que** le multiplexeur (17) applique à l'électrode (4, 5) sélectionnée pour l'affichage le signal électrique spécifique.

2. Dispositif selon la revendication 1, **caractérisé en ce que** les électrodes de lignes (4) et les électrodes de colonnes (5) forment respectivement deux réseaux distincts, **en ce qu'**au moins un réseau d'électrodes (4, 5) est choisi pour la détection de proximité, et **en ce que** les moyens (15) pour déterminer la position de ladite région définissent cette position en fonction du niveau desdites modifications intervenant sur le réseau (4, 5) choisi.

3. Dispositif selon la revendication 1, **caractérisé en ce que** le signal électrique spécifique est appliqué à la fois aux lignes (4) et aux colonnes (5), et **en ce que** les moyens (15) pour déterminer la position de ladite région définissent cette position en fonction d'au moins une ligne et d'au moins une colonne pour lesquelles lesdites modifications franchissent un seuil.

4. Dispositif selon la revendication 1, **caractérisé en ce que** le signal électrique est appliqué simultanément à au moins une électrode de ligne (4) et à au moins une électrode de colonne (5) et **en ce que** des couplages entre l'électrode de ligne (4) et l'électrode de colonne (5) sont modifiés lorsque l'élément conducteur est à proximité du croisement entre l'électrode de ligne (4) et l'électrode de colonne (5).

5. Dispositif selon la revendication 4, **caractérisé en ce que** le signal électrique spécifique est appliqué audit ensemble de façon diagonale.

6. Dispositif selon la revendication 5, **caractérisé en ce que** le signal électrique est appliqué audit ensemble selon deux diagonales de la zone d'affichage.

7. Dispositif selon l'une des revendications précédentes, **caractérisé en ce que** les moyens (15) pour déterminer la position de ladite région ne prennent en compte les modifications que si elles interviennent sur plusieurs électrodes voisines (4, 5).

8. Dispositif selon l'une des revendications précédentes, **caractérisé en ce que** le signal électrique spécifique est appliqué successivement à différentes électrodes (4,5).

9. Dispositif selon l'une des revendications précédentes, **caractérisé en ce que** les électrodes (4, 5) sont interdigitées.

10. Dispositif selon l'une des revendications précédentes, **caractérisé en ce que** l'élément conducteur comporte un stylet.

11. Dispositif selon l'une quelconque des revendications précédentes, **caractérisé en ce que** le signal électrique spécifique a une fréquence supérieure à 100 kilohertz.

12. Dispositif selon l'une des revendications précédentes, **caractérisé en ce que** les moyens (30) pour piloter l'affichage comprennent en outre des moyens (7) générant le signal électrique spécifique, un démodulateur d'amplitude (12) et un convertisseur analogique-numérique (31), le démodulateur d'amplitude (12) recevant le signal électrique spécifique et fournissant au convertisseur anlogique-numérique (31) un signal représentatif desdites modifications.

13. Dispositif selon l'une des revendications précédentes, **caractérisé en ce que** les électrodes (4, 5) choisies pour la détection de proximités reçoivent le signal électrique de façon cyclique.

14. Dispositif selon l'une des revendications précédentes, **caractérisé en ce que** le signal électrique spécifique est superposé à l'excitation.

15. Dispositif selon l'une des revendications 1 à 13, **caractérisé en ce que** le signal électrique spécifique est appliqué à une électrode (4, 5) lorsque l'excitation n'est pas appliquée à cette électrode (4, 5).

## Claims

1. Electronic display device comprising means of detection of proximity of a conducting element situated in proximity to a display zone of the device, a set of row electrodes (4) and of column electrodes (5) scanning the display zone, means for generating an excitation of the row electrodes and of the column electrodes as a function of an image to be displayed on the display zone, means (16, 30) for driving the display comprising a multiplexer (17) intended to apply an excitation voltage (22) to an electrode (4, 5) selected for the display, the proximity detection means comprising:
- means (7) for applying a specific electrical signal distinct from the excitation voltage to said set,
- means (8) for detecting modifications of the specific electrical signal which are induced by the presence of a conducting element in proximity to a region of the display zone,
- and means (15) for determining the position of said region as a function of said detected modifications,
**characterized in that** the multiplexer (17) applies the specific electrical signal to the electrode (4, 5) selected for the display.

2. Device according to Claim 1, **characterized in that** the row electrodes (4) and the column electrodes (5) respectively form two distinct arrays, **in that** at least one array of electrodes (4, 5) is chosen for the proximity detection, and **in that** the means (15) for determining the position of said region define this position as a function of the level of said modifications intervening on the chosen array (4, 5).

3. Device according to Claim 1, **characterized in that** the specific electrical signal is applied both to the rows (4) and to the columns (5), and **in that** the means (15) for determining the position of said region define this position as a function of at least one row and of at least one column for which said modifications overstep a threshold.

4. Device according to Claim 1, **characterized in that** the electrical signal is applied simultaneously to at least one row electrode (4) and to at least one column electrode (5) and **in that** couplings between the row electrode (4) and the column electrode (5) are modified when the conducting element is in proximity to the crossover between the row electrode (4) and the column electrode (5).

5. Device according to Claim 4, **characterized in that** the specific electrical signal is applied to said set diagonally.

6. Device according to Claim 5, **characterized in that** the electrical signal is applied to said set along two diagonals of the display zone.

7. Device according to one of the preceding claims, **characterized in that** the means (15) for determining the position of said region take no account of the modifications unless they intervene on several neighboring electrodes (4, 5).

8. Device according to one of the preceding claims, **characterized in that** the specific electrical signal is applied successively to various electrodes (4, 5).

9. Device according to one of the preceding claims, **characterized in that** the electrodes (4, 5) are interdigitated.

10. Device according to one of the preceding claims, **characterized in that** the conducting element comprises a stylus.

11. Device according to any one of the preceding claims, **characterized in that** the specific electrical signal has a frequency above 100 kilohertz.

12. Device according to one of the preceding claims, **characterized in that** the means (30) for driving the display furthermore comprise means (7) generating the specific electrical signal, an amplitude demodulator (12) and an analog/digital converter (31), the amplitude demodulator (12) receiving the specific electrical signal and providing the analog/digital converter (31) with a signal representative of said modifications.

13. Device according to one of the preceding claims, **characterized in that** the electrodes (4, 5) chosen for the detection of proximities receive the electrical signal cyclically.

14. Device according to one of the preceding claims, **characterized in that** the specific electrical signal is superimposed on the excitation.

15. Device according to one of Claims 1 to 13, **characterized in that** the specific electrical signal is applied to an electrode (4, 5) when the excitation is not applied to this electrode (4, 5).

## Patentansprüche

1. Elektronische Anzeigevorrichtung, mit Mitteln zum Erfassen der Nähe eines Leiterelements, das sich in der Nähe einer Anzeigezone der Vorrichtung befindet, einer Gesamtheit von Zeilenelektroden (4) und Spaltenelektroden (5), die die Anzeigezone überdecken, Mitteln zum Erzeugen einer Erregung der Zeilenelektroden und der Spaltenelektroden als Funktion eines in der Anzeigezone anzuzeigenden Bildes, Mitteln (16, 30) zum Steuern der Anzeige, die einen Multiplexer (17) enthalten, der dazu vorgesehen ist, an eine für die Anzeige ausgewählte Elektrode (4, 5) eine Erregungsspannung (22) anzulegen, wobei die Nähe-Erfassungsmittel enthalten:
- Mittel (7), um an die Gesamtheit ein von der Erregungsspannung verschiedenes spezifisches elektrisches Signal anzulegen,
- Mittel (8), um die Modifikationen des spezifischen elektrischen Signals, die durch das Vorhandensein eines Leiterelements in der Nähe einer Region der Anzeigezone induziert werden, zu erfassen,
- und Mittel (15), um die Position der Region als Funktion der erfassten Modifikationen zu bestimmen,
**dadurch gekennzeichnet, dass** der Multiplexer (17) an die für die Anzeige ausgewählte Elektrode (4, 5) das spezifische Signal anlegt.

2. Vorrichtung nach Anspruch 1, **dadurch gekennzeichnet, dass** die Zeilenelektroden (4) und die Spaltenelektroden (5) zwei verschiedene Gitter bilden, dass wenigstens ein Elektrodengitter (4, 5) für die Nähe-Erfassung gewählt ist und dass die Mittel (15) zum Bestimmen der Position der Region diese Position als Funktion des Ausmaßes der Modifikationen, die in dem ausgewählten Gitter (4, 5) auftreten, definieren.

3. Vorrichtung nach Anspruch 1, **dadurch gekennzeichnet, dass** das spezifische elektrische Signal zugleich an die Zeilen (4) und an die Spalten (5) angelegt wird und dass die Mittel (15) zum Bestimmen der Position der Region diese Position als Funktion wenigstens einer Zeile und wenigstens einer Spalte, für die die Modifikationen einen Schwellenwert übersteigen, definieren.

4. Vorrichtung nach Anspruch 1, **dadurch gekennzeichnet, dass** das elektrische Signal gleichzeitig an wenigstens eine Zeilenelektrode (4) und an wenigstens eine Spaltenelektrode (5) angelegt wird und dass Kopplungen zwischen der Zeilenelektrode (4) und der Spaltenelektrode (5) modifiziert werden, wenn sich das Leiterelement in der Nähe der Kreuzung zwischen der Zeilenelektrode (4) und der Spaltenelektrode (5) befindet.

5. Vorrichtung nach Anspruch 4, **dadurch gekennzeichnet, dass** das spezifische elektrische Signal an die Gesamtheit diagonal angelegt wird.

6. Vorrichtung nach Anspruch 5, **dadurch gekennzeichnet, dass** das elektrische Signal an die Gesamtheit längs zweier Diagonalen der Anzeigezone angelegt wird.

7. Vorrichtung nach einem der vorhergehenden Ansprüche, **dadurch gekennzeichnet, dass** die Mittel (15) zum Bestimmen der Position der Region die Modifikationen nur berücksichtigen, wenn diese an mehreren benachbarten Elektroden (4, 5) auftreten.

8. Vorrichtung nach einem der vorhergehenden Ansprüche, **dadurch gekennzeichnet, dass** das spezifische elektrische Signal nacheinander an verschiedene Elektroden (4, 5) angelegt wird.

9. Vorrichtung nach einem der vorhergehenden Ansprüche, **dadurch gekennzeichnet, dass** die Elektroden (4, 5) interdigital angeordnet sind.

10. Vorrichtung nach einem der vorhergehenden Ansprüche, **dadurch gekennzeichnet, dass** das Leiterelement einen Stift enthält.

11. Vorrichtung nach einem der vorhergehenden Ansprüche, **dadurch gekennzeichnet, dass** das spezifische elektrische Signal eine Frequenz von mehr als 100 kHz hat.

12. Vorrichtung nach einem der vorhergehenden Ansprüche, **dadurch gekennzeichnet, dass** die Mittel (30) zum Steuern der Anzeige außerdem Mittel (7), die das spezifische elektrische Signal erzeugen, einen Amplitudendemodulator (12) und einen Analog/DigitalUmsetzer (31) enthalten, wobei der Amplitudendemodulator (12) das spezifische elektrische Signal empfängt und an den Analog/Digital-Umsetzer (31) ein die Modifikationen repräsentierendes Signal liefert.

13. Vorrichtung nach einem der vorhergehenden Ansprüche, **dadurch gekennzeichnet, dass** die Elektroden (4, 5), die für die Nähe-Erfassung gewählt sind, das elektrische Signal zyklisch empfangen.

14. Vorrichtung nach einem der vorhergehenden Ansprüche, **dadurch gekennzeichnet, dass** das spezifische elektrische Signal der Erregung überlagert wird.

15. Vorrichtung nach einem der Ansprüche 1 bis 13, **dadurch gekennzeichnet, dass** das spezifische elektrische Signal an eine Elektrode (4, 5) angelegt wird, wenn die Erregung nicht an diese Elektrode (4, 5) angelegt wird.
